# EUROPEAN PATENT SPECIFICATION

(11) **EP 4 169 741 B1**
(45) Date of publication and mention of the grant of the patent: **27.03.2024**
(21) Application number: 22201802.0
(22) Date of filing: 17.10.2022
(51) Int. Cl.: B60C 11/11, B60C 13/02, B60C 11/01, B60C 11/03, B60C 11/13

(54) **TIRE**
REIFEN
PNEUMATIQUE

(30) Priority: 22.10.2021 JP 2021172995
(43) Date of publication of application: 26.04.2023
(73) Proprietor: Toyo Tire Corporation, Itami-shi, Hyogo 664-0847 (JP)
(72) Inventor: MATSUBARA, Keisuke, Itami-shi, Hyogo, 664-0847 (JP)
(74) Representative: Müller-Boré & Partner Patentanwälte PartG mbB

(56) References cited:
- EP-A1- 3 275 698
- EP-A1- 3 603 991
- WO-A1-2020/054768
- US-A1- 2018 001 707

## Description

### BACKGROUND OF THE INVENTION

### Field of the Invention

The present invention relates to a tire suited to traveling on a road surface which is off road, for example.

### Related Art

Tires for which traveling on a road surface which is off-road is assumed, normally, often form a block pattern in a tread surface by demarcating land portions constituting the tread surface into a plurality of blocks, by fixedly setting a plurality of main grooves extending along the tire-circumferential direction, or main grooves, and transverse grooves extending between main grooves and between the main groove and tread ends.

With such a tire, upon traveling on an off-road surface, a phenomenon tends to occur called so-called side cut, in which cracks in the tire-radial direction generate in the lateral face of the tire, particularly in the outer surface of the sidewall from the shoulder region of the tread, by impact or contact with unevenness of stones, etc. assuming various shapes scattered on the road surface, pointed parts of rocks, etc.

If side cut occurs in the tire, there is concern over damage due to side cut gradually progressing together with travel, and the tire puncturing in the worst case. As a result thereof, there is a problem in that early replacement of the tire becomes necessary by the useful life of the tire shortening.

As a conventional tire in which such a block pattern is formed, for example, Patent Document 1 discloses a pneumatic tire including a tread and a pair of buttress parts extending from both ends in a tire-axial direction of the tread to an inner side in the tire-axial direction, in which a protector row is formed in at least one of the pair of buttress parts, and the protector row has pattern units including a protector protruding outwards in the tire-axial direction aligned in a tire-circumferential direction, in which the pattern units include a plurality of types having a different pitch, which is the tire-circumferential direction length, and the protectors of the pattern units of a plurality of types respectively have substantially the same protector volume. According to the disclosure of Patent Document 1, this pneumatic tire is said to not only raise traction on muddy ground, by fixedly setting protectors (side blocks) in a buttress part, but also be able to particularly improve uniformity, in addition to having favorable cut resistance and favorable appearance performance.

In the tire of Patent Document 1, it is disclosed that the pattern units of the protector (side block) and tread (of shoulder block) pattern units match may be fixedly set so as to match in the tire-circumferential direction, or may be fixedly set to be displaced, and what is specifically shown in the drawings and examples of Patent Document 1 are cases of both the pattern units of the protector (side blocks) and tread (of shoulder block) pattern units fixedly set so as to match in the tire-circumferential direction.

However, the relative positional relationship between the pattern units of the protector (side block) and tread pattern units (of shoulder block) is not specified as in the tire of Patent Document 1, and if a case of fixedly setting the pattern units of a protector (side block) and tread (of shoulder block) pattern units so as to match in the tire-circumferential direction as in the drawings and examples of Patent Document 1, since a lateral face portion of the tire positioned to correspond to the groove bottom of a shoulder transverse groove demarcating the shoulder block has a relatively low rigidity compared to the lateral face portion of the tire positioned to correspond to the shoulder block, and additionally, the protector (side block) is not arranged at the outer surface position of the sidewall corresponding to the groove bottom of the shoulder transverse groove, for example, upon causing the vehicle to travel on a road surface which is off-road under severe travel conditions as in the case of the stones scattered on the road surface being stones having jagged shape or on a road where sharp parts of rocks exist, if the sharp parts of rocks, etc. collide or contact with the lateral face of the tire, there is a problem in that side cut tends to occur at the lateral face portion of the tire positioned to correspond to the groove bottom of the shoulder transverse groove. Furthermore, even if assuming to fixedly set the protector (side block) at a position corresponding to the groove bottom of the shoulder transverse groove, if the size (particularly circumferential-direction dimension) of the protector (side block) is not a reasonable size, it will not be possible to sufficiently raise the rigidity of the lateral face portion of the tire positioned to correspond to the groove bottom of the shoulder transverse groove, and as a result of the possibility of rubber chipping of the side blocks themselves also being high, it is not possible to effectively suppress side cut, which tends to occur at the lateral face portion of the tire positioned to correspond to the groove bottom of the shoulder transverse groove. Additionally, it is not desired if rubber chipping occurs in the side blocks, since the appearance of the tire will deteriorate in addition to the traction performance declining on a road surface which is off-road such as muddy ground.

Patent Document 1: Japanese Unexamined Patent Application, Publication No. 2020-93754

EP 3 275 698 A1 discloses a pneumatic tire capable of exerting excellent mud performance while improving durability of the sidewall portion by improving the side protector.

WO 2020/054768 A1) discloses a pneumatic tire providing enhanced driving performance on unpaved roads and enhanced cut resistance.

US 2018/001707 A1 discloses a pneumatic tire that is capable of achieving improvement in external damage resistance while securing traction performance on muddy terrain.

EP 3 603 991 A1 discloses pneumatic tyres capable of improving traction on snow.

### SUMMARY OF THE INVENTION

An object of the present invention is to provide a tire which can effectively suppress side cut, which tends to occur from a shoulder region of a tread to the outer surface of a side wheel in particular, and improve the anti-puncture performance, as well as maintain favorable traction performance over a long period, even in a case of traveling on a road surface which is off-road, for example. The present invention is defined by the independent claim. Further aspects are defined in the dependent claims.

The present inventors found that, by including a side block row configured by a plurality of side blocks of a size (particularly the circumferential-direction dimension Lb) having sufficient rigidity in a positional relationship corresponding to the circumferential-direction range in which one shoulder block and two shoulder transverse grooves demarcating this shoulder block exist, at the outer surface of the sidewall positioned at a side of the shoulder region, even in the case of travelling on a road surface which is off-road, for example, it is possible to effectively suppress side cut, which tends to occur from the shoulder region of the tread to the outer surface of the sidewall in particular, and improve the anti-puncture performance, as well as maintain favorable traction performance over a long period, thereby arriving at completion of the present invention.

More specifically, a tire according to the present invention includes: a tread; a pair of sidewalls extending from both ends in a tire-width direction of the tread towards an inner side in a tire-radial direction; a shoulder region demarcated and formed by a tread end and a shoulder main groove extending along a tire-circumferential direction, in a tread surface, the shoulder region including a plurality of shoulder transverse grooves extending from the shoulder main groove toward an outer side in the tire-width direction is fixedly set; and a shoulder block row configured by aligning in the tire-circumferential direction a plurality of shoulder blocks demarcated by the tread end, the shoulder main groove and the plurality of shoulder transverse grooves, in which the sidewall includes a side block row configured by a plurality of side blocks fixedly set side-by-side in the tire-circumferential direction, and protruding from a surface of the sidewall, and a circumferential-direction dimension of one side block is larger than a circumferential-direction dimension of a region in which one shoulder block and two shoulder transverse grooves demarcating the one shoulder block exist.

With the tire of the present invention configured in this way, by including the side block row configured by a plurality of side blocks fixedly set side-by-side in the tire-circumferential direction in a positional relationship corresponding to the circumferential range at an outer surface of a sidewall positioned on a side of at least one shoulder region among the pair of shoulder regions, and having a circumferential-direction dimension of at least the circumferential-direction range, it is possible to effectively reinforce the lateral face portion of the tire positioned to correspond to the groove bottom of the shoulder transverse groove having relatively low rigidity and at which side cut tends to generate, by the side blocks having sufficient rigidity, while suppressing to the utmost a weight increase of the tire. As a result thereof, even in a case of traveling on a road surface which is off-road, it is possible to effectively suppressing side cut which tends to occur from the shoulder region of the tread to the outer surface of the sidewall, thereby improving the anti-puncture performance, as well as maintain favorable traction performance over a long period.

In addition, in the tire of the present invention, it is preferable for the circumferential-direction dimension of the one side block to be larger than the circumferential-direction dimension of a region in which the two shoulder transverse grooves exist, and the side blocks to be fixedly set in a positional relationship overlapping in a tire-circumferential direction with both of two shoulder blocks positioned on both sides in the tire-circumferential direction of the one shoulder block. Additionally, it is preferable for the side block to have a circumferential-direction overlapping dimension with the two shoulder blocks in a range of at least 5% and no more than 20% relative to a circumferential-direction dimension of each of the shoulder blocks.

By adopting these configurations, it is possible to much more effectively suppress side cut which tends to occur from the shoulder region of the tread to the outer surface of the sidewall in particular.

Furthermore, in the tire of the present invention, it is preferable for the side block to have a maximum height dimension from a surface of the sidewall in a range of at least 4 mm and no more than 15 mm.

Since it is thereby possible to effectively raise the rigidity of the side blocks while suppressing to the utmost an increase in tire weight, it is possible to much more effectively suppress side cut, as well as being possible to much better maintain the traction performance on a road surface which is off-road such as muddy ground over a long period.

Additionally, in the tire of the present invention, the shoulder block row is configured by two types of shoulder blocks having different sizes of block tread surface alternately arranged in a tire-circumferential direction, and the two types of shoulder blocks include a first shoulder block, and a second shoulder block in which a tire-width direction outer end position is positioned more to an inner side in a tire-width direction than a tire-width direction outer end position of the first shoulder block.

It is thereby possible to improve the traction performance on a road surface which is off-road, by giving a step by mutually shifting the tire-width direction outer end positions at the first shoulder block and second shoulder block positioned adjacently in the tire-circumferential direction.

Moreover, in the tire of the present invention, it is preferable for the first shoulder block (having a large block tread surface size) to configure the two shoulder blocks positioned on both sides in a tire-circumferential direction of the one shoulder block, and it is preferable for the second shoulder block (having a small block tread surface size) to configure the one shoulder block.

By adopting these configurations, it is possible to make the rigidity of the lateral face of the tire much more uniform over the tire-circumferential direction, while suppressing to the utmost a weight increase of the tire, a result of which it is possible to realize with good balance both a suppression in side cut and favorable traction performance.

In addition, in the tire of the present invention, it is preferable for the tread to include a center region demarcated and formed by the pair of shoulder main grooves, in which a center main groove extending along a tire-circumferential direction is fixedly set in the center region; and two center block rows configured by arranging side-by-side in the tire-circumferential direction a plurality of center blocks divided by configuring the center main groove and the pair of shoulder main grooves in an extended form of substantially zigzag shape connecting to each other.

It is thereby possible to sufficiently realize favorable traction performance across normal paved roads and every running road surface of off-road surfaces which are not paved.

According to the present invention, it is possible to provide a tire which can effectively suppress side cut, which tends to occur from a shoulder region of a tread to the outer surface of a side wheel in particular, and improve the anti-puncture performance, as well as maintain favorable traction performance over a long period, even in a case of traveling on a road surface which is off-road, for example.

### BRIEF DESCRIPTION OF THE DRAWINGS

FIG. 1 is an expansion drawing of a portion of a tire according to an embodiment of the present invention from the tread until (part of) sidewalls;
FIG. 2 is a width-direction half section of the tire shown in FIG. 1;
FIG. 3 is a view for explaining a relative positional relationship between a shoulder block and side block in the tire of Example 1 which is not part of the present invention; and
FIG. 4 is a view for explaining a relative positional relationship in a tire-circumferential direction C between the shoulder block and side block in the tire of Example 2 of the present invention.

### DETAILED DESCRIPTION OF THE INVENTION

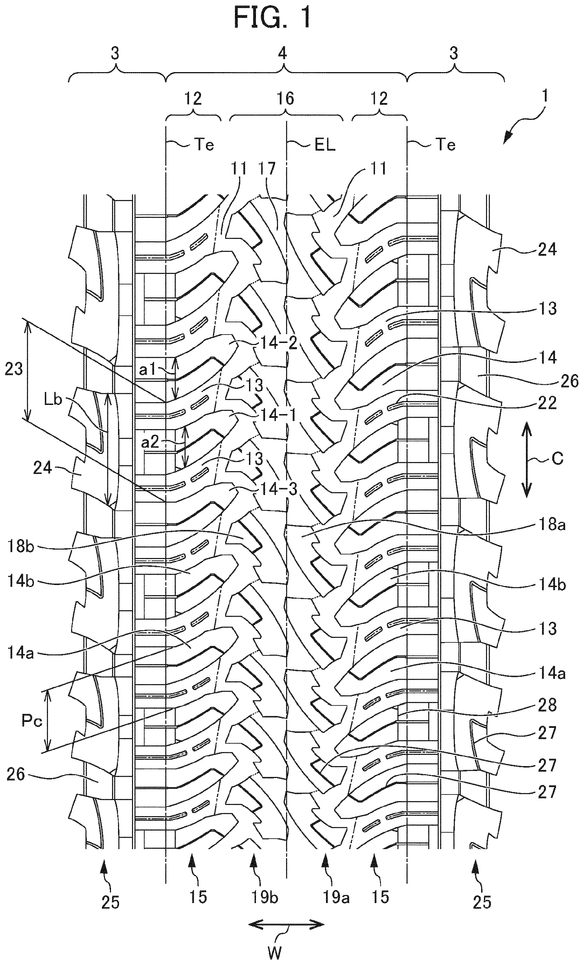

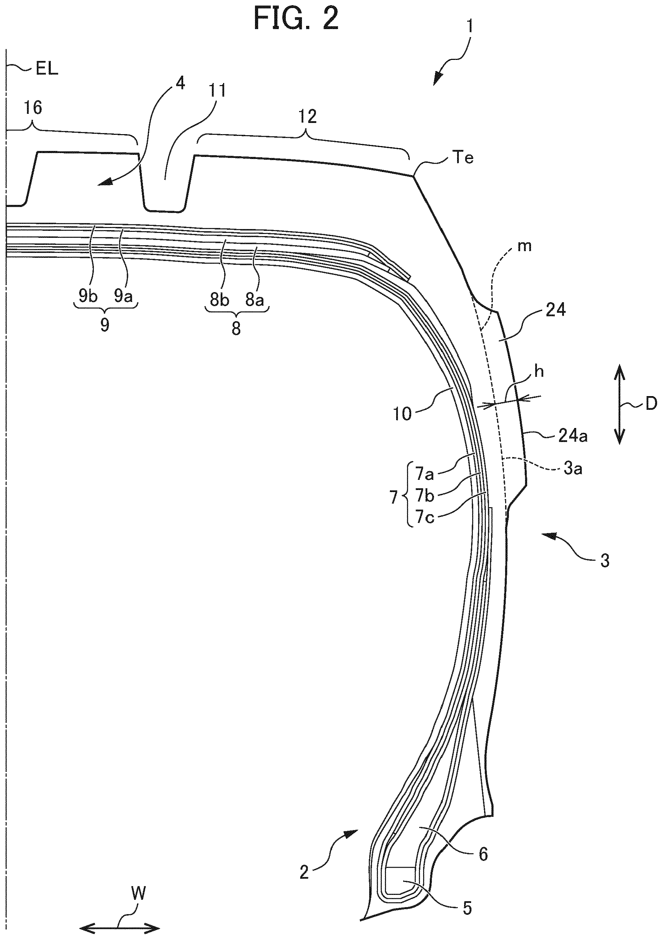

Next, an embodiment of a tire according to the present invention will be explained below while referencing the drawings. FIG. 1 is an expansion drawing of a portion of a tire according to an embodiment of the present invention from the tread until (part of) sidewalls, and FIG. 2 is a width-direction half section of the tire shown in FIG. 1. It should be noted that, in FIG. 2, the hatching of the cross section is omitted to facilitate understanding the cross-sectional structure.

The tire 1 of the present invention is a pneumatic tire (hereinafter may be referred to simply as "tire") which can be favorably used in a vehicle that can travel not only on paved roads, but also on a road surface which is so-called off-road, including every location of terrain to which the vehicle can enter such as grassy, gravely, sandy or muddy areas which are unpaved, for example. However, the tire 1 of the present invention is not limited only to such a situation or use. It should be noted that "road surface which is off-road" referred to herein indicates a road surface including every location of terrain to which the vehicle can enter such as grassy, gravely, sandy or muddy areas which are unpaved, for example.

As shown in FIG. 2, the tire 1 of the present embodiment includes: a pair of beads 2 (illustration of only one bead), a pair of sidewalls 3 (illustration of only one sidewall) extending from each of this pair of beads 2 to outwards in the tire-radial direction, and a tread 4 (illustration of only half) stretching to both of the outer ends in the tire-radial direction of this pair of sidewalls 3. In other words, a pair of sidewalls 3 is considered to extend from both ends in the tire-width direction of the tread 4 toward the inner side in the tire-radial direction. The bead 2 includes an annular bead core 5 made by rubber coating a steel cord or the like; and a bead filler 6 arranged at the outer side in the tire-radial direction of the bead core 5.

In addition, the tire 1 includes: a carcass 7 engaged with the pair of bead cores 5 and extending in a toroid shape as a whole; a belt 8 and reinforcement belt 9 provided between the tread 4 and the carcass 7; and an inner liner 10 provided at the inner surface side of the carcass 7 for air pressure retention.

A case is shown of the carcass 7 being configured by at least one carcass ply, for example, in FIG. 1, the two carcass plies 7a, 7c, which are turned-up plies lifted up by configuring so as to sandwich the bead core 5 and bead filler 6; and one carcass ply 7b which is a down ply positioned between these carcass plies 7a, 7c, and in which both end parts do not reach the bead core 5. These carcass plies 7a to 7c are configured by carcass cords radially arranged at angles of 75 to 90 degrees relative to the tire equatorial plane EL, for example.

The belt 8 is fixedly set between the tread 4 and the carcass 7 to reinforce the carcass 7. The belt 8 is configured from at least two belt plies fixedly set by laminating belt cords of steel, organic fiber of the like so as to become an oblique arrangement extending in a direction intersecting the tire equatorial plane EL, and in the present embodiment, by the two belt plies 8a and 8b. The belt plies 8a and 8b are desirably fixedly set by laminating in a positional relationship such that the belt cords are arranged with slopes of different orientations from each other relative to the tire-circumferential direction C, for example. With the tire of the present embodiment, the belt cords of the belt plies 8a, 8b are preferably obliquely arranged at angles of 10 to 45 degrees relative to the tire equatorial plane EL.

In addition, with the tire of the present embodiment, the reinforcement belt 9 arranged so as to cover part or the entirety of the outer surface of the belt 8 is fixedly arranged. The reinforcement belt 9 is usually a layer with cord rubber arranging the cords substantially in parallel (0 to 5 degrees) relative to the tire equatorial plane EL. Although the tire of the present embodiment shows a case in which the reinforcement belt 9 is configured by the two layers of double-width reinforcing plies 9a, 9b fixedly arranged so as to cover the entirety of the outer surface of the belt 8, it may be configured by one layer or three or more layers of double-width reinforcing plies. In addition, the reinforcing belt 9 may be configured by a pair of narrow-width reinforcement plies (not illustrated) consisting of a narrow layer with cord rubber covering only both end parts of the belt, and further, can be configured by combining both a wide reinforcement ply and pair of narrow-width reinforcement plies.

The tread 4 includes a pair of shoulder regions 12, 12 formed by dividing by a pair of tread ends Te, Te and a pair of shoulder main grooves 11, 11, as shown in FIG. 1. The pair of shoulder main grooves 11, 11 is fixedly set in a positional relationship spaced apart sandwiching a tire equatorial plane EL, and extends along the tire-circumferential direction C.

In addition, in each shoulder region 12, a plurality of shoulder transverse grooves 13, 13, ... extending from the shoulder main groove 11 towards the outer side in the tire-width direction W is fixedly arranged, and includes a shoulder block row 15 configured by aligning in the tire-circumferential direction C the plurality of shoulder blocks 14, 14, ... demarcated by the tread end Te, shoulder main groove 11 and plurality of shoulder transverse grooves 13, 13. Herein, the tire 1 of the embodiment shown in FIG. 1 shows a case in which the shoulder block row 15 is made by configuring two types of shoulder blocks 14a, 14b having different sizes on the block tread surface to be alternately side-by-side in the tire-circumferential direction C. In this tire 1, the tire-width direction outer end of the first shoulder block 14a is at the same position as the tread end Te, and the tire-width direction outer end of a second shoulder block 14b is located more to the inner side in the tire-width direction W than the tire-width direction outer end of the first shoulder block 14a. It should be noted that the tire of the present invention is not limited to only such a configuration, and can be configuring the plurality of shoulder blocks constituting the shoulder block row 15 by only one type of shoulder block having the same size of block tread surface, or may be configured by three types of shoulder blocks having different sizes of block tread surface.

In addition, the tire 1 of the present embodiment, when viewing (part of the tread surface and the sidewall of) the tire 1 expanded on a plan view as shown in FIG. 1, includes: a side block row 25 configured by a plurality of side blocks 24, 24, ... fixedly set side-by-side in a tire-circumferential direction C in a positional relationship corresponding to the circumferential-direction dimension 23 of a region in which one shoulder block 14-1 and two shoulder transverse grooves 13, 13 demarcating the one shoulder block 14-1 respectively exist on the outer surface of the sidewalls 3, 3 positioned on the side of at least one shoulder region among the pair of shoulder regions 12, 12, in FIG. 1, on the side of both shoulder regions 12, 12, and having a circumferential-direction dimension Lb of at least the circumferential-direction dimension 23, and protruding from the outer surface of the sidewall 3 outwards. In other words, the sidewall 3 includes the side block row 25 configured by a plurality of side blocks 24, 24, ... fixedly set side-by-side in the tire-circumferential C and protruding from the surface of the sidewall, in which a circumferential-direction dimension Lb of one side block 24 is larger than the circumferential-direction dimension 23 of a region in which one shoulder block 14-1 and two shoulder transverse grooves 13 demarcating the one shoulder block 14-1 exist.

In the tire 1 of the present embodiment, by including the side block row 25 configured by the above such side blocks 24, 24, ... on the outer surface of the sidewall 3 positioned on the side of at least one shoulder region 12, it is possible to reinforce the portion of the tire lateral face on which the groove bottom of the shoulder transverse groove 13 in which side cut tends to generate by the rigidity being relative low is positioned, by the side blocks 24 having sufficient rigidity, while suppressing to the utmost a weight increase of the tire. Furthermore, in the tire 1 of the present embodiment, in the case of traveling on a soft road surface such as such as sandy soil or muddy soil, since the side block row 25 positioned on the sidewall 3 of the tire comes to make pseudo-ground contact due to the tire sinking in by the weight of the vehicle, the force paddling water, soil, sand, mud, etc. will rise by the recess grooves 26 positioned between the side blocks 24, 24, ... As a result thereof, it is possible to effectively suppress side cut which tends to occur from the shoulder region 12 of the tread 4 to the outer surface of the sidewall 3 in particular, and possible to maintain favorable traction performance over a long period as well as improve anti-puncture performance.

It should be noted that, although FIG. 1 shows an example of a case of including the side block row 25 in the outer surface of the sidewalls 3, 3 positioned on the sides of both shoulder regions 12, 12, it is sufficient if including at least the aforementioned side block row 25 in at least one shoulder region, more specifically, the outer surface of the sidewall of the tire positioned on the vehicle outer side, for which the frequency of impact or contact with pointed rocks, etc. on the road surface which is off-road is high.

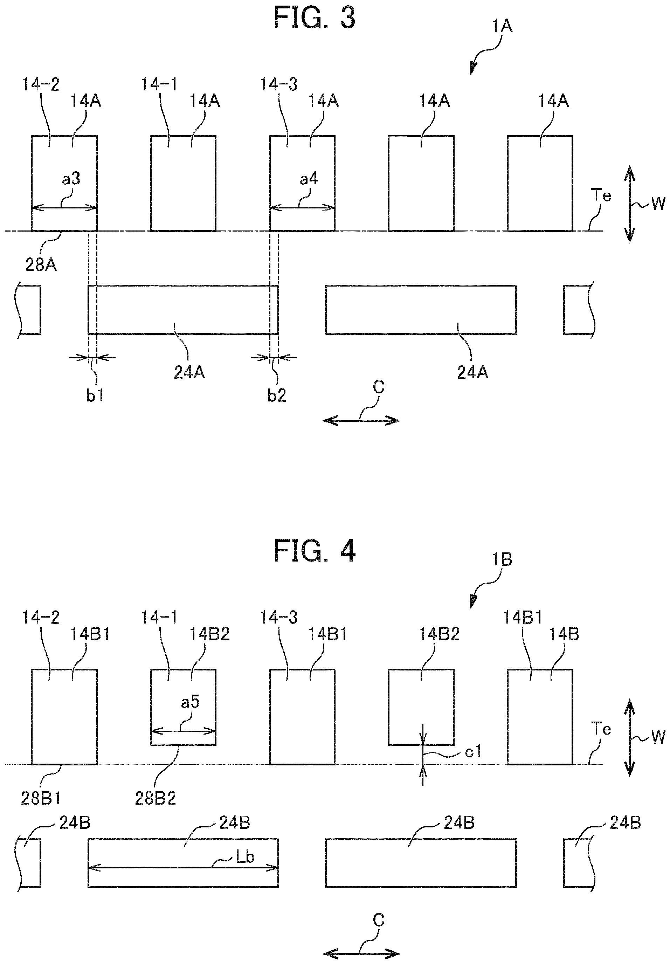

In addition, the side blocks 24 preferably have a larger circumferential direction dimension Lb than the circumferential-direction dimension 23, and are fixedly set in a positional relationship overlapping in the tire-circumferential direction C with both of two shoulder blocks 14-2, 14-3 positioned on both sides in the tire-circumferential direction C of one shoulder block 14-1 (refer to FIGS. 1 and 3). By adopting this configuration, the lateral face portion of the tire positioned to correspond to the groove bottom of the shoulder transverse groove 13 at which side chip tends to generate is reinforced by the side blocks 24 having sufficient rigidity, uniformity over the entirety of the tire-circumferential direction C is achieved for the rigidity of the lateral face portion of the tire 1 from the shoulder region 12 of the tread 4 until the region of the sidewall 3 reinforced by the side blocks 24; therefore, it is possible to much better suppress side cut due to the lateral face of the tire 1 hardly receiving damage by impact or contact with stones having a jagged shape scattered on the road surface or the pointed parts of rocks.

In addition, FIG. 3 is a view for explaining a relative positional relationship in the tire-circumferential direction C between the shoulder block 14A (the reference numbers of 14-1, 14-2, 14-3 are jointly noted in three of the shoulder blocks 14A shown in FIG. 3, for convenience of explanation) and a side block 24A in a tire 1A according to another embodiment (Example 1) not being part of the present invention. As shown in FIG. 3, for the side block 24A, the circumferential-direction overlapping dimensions b1, b2 of the two shoulder blocks 14-2, 14-3 positioned on both sides in the tire-circumferential direction C of the one shoulder block 14-1 are more suitably in the range of at least 5% and no more than 20% relative to the circumferential-direction dimensions a3, a4 of each shoulder block 14-2, 14-3. By establishing the circumferential-direction overlapping dimensions b1, b2 of the two shoulder blocks 14-2, 14-3 of the side block 24 in the range of at least 5% and no more than 20% relative to the circumferential direction dimensions a3, a4, it is possible to effectively raise the rigidity of the side block 24, while lowering the weight increase in the tire to the utmost, and possible to make the rigidity of the lateral face portion of the tire 1 much more uniform over the entirety of the tire-circumferential direction C.

The side block 24 preferably has a maximum height dimension h protruding towards the outer side in the tire-width direction within the range of at least 4 mm and no more than 15 mm. By adopting this configuration, it is possible to effectively improve the side cut performance, while suppressing a weight increase in the tire to the utmost.

It should be noted that the maximum height dimension h of the side block 24 is a maximum value of a dimension when measuring the vertical distance from the outer surface 3a of the sidewall 3 along the profile line m of the tire T until the outer face 24a of the side block 24 (refer to FIG. 2).

In addition, FIG. 4 is a view for explaining a relative positional relationship in the tire-circumferential direction C between a shoulder block 14B of the tread 4 (the reference numbers of 14-1, 14-2, 14-3 are jointly noted in three of the shoulder blocks 14B shown in FIG. 3, for convenience of explanation) and a side block 24B of the sidewall 3 of the tire 1B according to the present invention. In the tire 1B of the invention shown in FIG. 4, the shoulder block row 15 is preferably configured by alternatively arranging in the tire-circumferential direction C two types of shoulder blocks 14B1, 14B2 having different width dimensions of the block. In addition, in the two types of shoulder blocks 14B1, 14B2, the first shoulder block 14B1 has a tire-width direction outer end 28B1 at the same position as a tread end Te, and a tire-width direction outer end 28B2 of the second shoulder block 14B2 to be positioned more to the inner side in the tire-width direction W than the tire-width direction outer end 28B1 of the first shoulder block 14B1. For example, the tire-width direction outer end 28B2 of the second shoulder block 14B2 is suitably positioned to an inner side in the tire-width direction W with a distance c1 when measuring from a position of the tire-width direction outer end 28B1 of the first shoulder block 14B1 along the tire-width direction W of 5 to 15 mm.

It is thereby possible to much better improve the traction performance on a road surface which is off-road, by giving a step by mutually shifting the tire-width direction outer end positions at the first shoulder block and second shoulder block positioned adjacently in the tire-circumferential direction.

Additionally, in the tire 1B shown in FIG. 4, the first shoulder block 14B1 is preferably configured by the two shoulder blocks 14-2, 14-3 having a larger tread surface size than the second shoulder block 14B2, and positioned on both sides in the tire-circumferential direction C of the one shoulder block 14-1, and further, the second shoulder block 14B2 is preferably configured by the one shoulder block 14-1 having a smaller tread surface size than the first shoulder block 14B1, and existing at a position where the circumferential-direction dimension a5 of the second shoulder block 14B2 completely overlaps in the circumferential direction with the circumferential-direction dimension Lb of the side block 24B fixedly set corresponding to the second shoulder block 14B2.

It is thereby possible to make the rigidity of the tire lateral face much more uniform over the tire-circumferential direction C, while suppressing to the utmost a weight increase of the tire, a result of which it is possible to realize with good balance both a suppression in side cut and favorable traction performance.

In addition, as shown in FIG. 1, in the tire 1 of the present embodiment, the tread 4 includes a center region 16 formed by dividing by the pair of shoulder main grooves 11, 11. Then, a case is shown of fixedly arranging the center main groove 17 extending along the tire-circumferential direction C in the center region 16, and configuring so as to include, on both sides of the tire equatorial plane EL, two center block rows 19a, 19b configured by aligning in the tire-circumferential direction C each of a plurality of center blocks 18a, 18a, .., and a plurality of center blocks 18b, 18b, .., divided by establishing the center main groove 17 and pair of shoulder main grooves 11, 11 in a substantially zigzag shape connecting with each other.

Additionally, the tire 1 of the present embodiment has a tread pattern formed so that the shoulder blocks 14, 14 respectively positioned in different shoulder block rows 15, 15, and the center blocks 18a, 18b respectively positioned in different center block rows 19a, 19b are rotated 180 degrees from each other to make a so-called point-symmetric pattern.

The tire having such a tread pattern is a favorable tire to be used without limiting the wheel (left/right wheel) mounting the tire relative to the vehicle; however, it may be a tread pattern which is line symmetrical relative to the tire equatorial plane as in the tire in the case of limiting the wheel mounting the tire relative to the vehicle, or alternatively, it is possible to form in a pattern differentiating the tread pattern positioned at both sides of the tire equatorial plane EL without being symmetrical, and is not particularly limited.

It should be noted that the tire of the present embodiment is not limited to only such a configuration for the center blocks 18a, 18b positioned in the center region 16, and is sufficient so long as having a shape which can exhibit stability and controllability including traction performance on a road surface which is off-road.

Each of the aforementioned dimension values is measured in an unloaded normal state mounting the tire to a standard rim and filling with standard internal pressure. Regular rim is a rim for which the standard is decided for every tire, in a specification system including the standard on which the tire is based, and indicates a "standard rim" if JATMA, "Design Rim" if TRA, and "Measuring Rim" if ETRTO. In addition, regular internal pressure is the air pressure decided by each standard for every tire in the specification system including the standard on which the tire is based, and indicates "maximum air pressure" if JATMA, the maximum value described in "TIRE LOAD LIMITS AT VARIOUS COLD INFLATION PRESSURES" if TRA, and "INFLATION PRESSURE" if ETRTO.

The tire according to the present invention can be configured identically to a normal pneumatic tire, other than configuring the shoulder region 12 of the tread 4 in the aforementioned way. Therefore, conventionally known materials, shapes, structures, manufacturing methods, etc. all can be applied to the tire of the present invention.

Although an embodiment of the present invention has been explained above, the present invention is not to be limited to the above-mentioned embodiment, but only to the scope of the appended claims. For example, for the reason of a reduction in pattern noise, etc., the tire 1 shown in FIG. 1 shows a case of forming in a tread pattern having so-called pitch variation, fixedly setting the shoulder blocks 14a, 14b by varying in the tire-circumferential direction C the arrangement pitch Pc of shoulder blocks 14a, 14b fixedly set in the tire-circumferential direction C; however, it is not limited to this configuration, and various forms may be considered. In addition, the tire shown in FIG. 1 shows a case of fixedly setting sipes and fine grooves 27 (FIG. 1), at the tread surfaces of the shoulder blocks 14a, 14b and the center blocks 18a, 18b, and the surface of the side blocks 24, for reason such as exhibiting an edge effect; however, such a configuration can be appropriately arranged as necessary, and the number of arrangements can be increased.

### EXPLANATION OF REFERENCE NUMERALS

1 tire (pneumatic tire)
2 bead
3 sidewall
4 tread
5 bead core
6 bead filler
7 carcass
8 belt
9 reinforcement belt
10 inner liner
11 shoulder main groove
12 shoulder region
13 shoulder transverse groove
14, 14-1, 14,-2, 14-3, 14A ~ 14E shoulder block
14B1 first shoulder block
14B2 second shoulder block
15 shoulder block row
16 center region
17 center main groove
18a, 18b center block
19a, 19b center block row
22 bump
23 circumferential direction dimension of region in which one
shoulder block and two shoulder transverse grooves dividing
the one shoulder block exist
24 side block
25 side block row
26 recessed groove
27 fine groove
28, 28A, 28B1, 28B2, 28C ~ 28E width-direction dimension of shoulder block
a1 ~ a5 circumferential-direction dimension of shoulder block
b1, b2 circumferential-direction overlapping dimension of side block and shoulder block
c1 tire-width direction distance from tire-width direction outer end of first shoulder block
C tire-circumferential direction
D tire-radial direction
EL tire equatorial plane
h maximum height dimension of side block
m profile line of tire
Lb circumferential-direction dimension of side block
Te tread end
W tire-width direction

## Claims

1. A tire (1) comprising: a tread (4); a pair of sidewalls (3) extending from both ends in a tire-width direction (W) of the tread (4) towards an inner side in a tire-radial direction; a shoulder region (12) demarcated and formed by a tread end (Te) and a shoulder main groove (11) extending along a tire-circumferential direction (C), in a tread surface, the shoulder region (12) including a plurality of shoulder transverse grooves (13) extending from the shoulder main groove (11) toward an outer side in the tire-width direction is fixedly set; and a shoulder block row configured by aligning in the tire-circumferential direction (C) a plurality of shoulder blocks (14) demarcated by the tread end (Te), the shoulder main groove (11) and the plurality of shoulder transverse grooves (13),
wherein the sidewall (3) includes a side block row (25) configured by a plurality of side blocks (24) fixedly set side-by-side in the tire-circumferential direction (C), and protruding from a surface of the sidewall (3),
wherein a circumferential-direction dimension (Lb) of one side block (24) is larger than a circumferential-direction dimension (23) of a region in which one shoulder block (14-1) and two shoulder transverse grooves (13) demarcating the one shoulder block (14-1) exist, and
wherein the shoulder block row (15) is configured by two types of shoulder blocks (14B1, 14B2) having different sizes of block tread surface alternately arranged in a tire-circumferential direction (C),
**characterized in that**
the two types of shoulder blocks (14B1, 14B2) include a first shoulder block (14B1), and a second shoulder block (14B2) in which a tire-width direction outer end position (28B2) is positioned more to an inner side in a tire-width direction than a tire-width direction outer end position (28B1) of the first shoulder block (14B1).

2. The tire (1) according to claim 1, wherein the circumferential-direction dimension (Lb) of the one side block (24) is larger than the circumferential-direction dimension (23) of a region in which the two shoulder transverse grooves (13) exist, and
wherein the side blocks (24) are fixedly set in a positional relationship overlapping in a tire-circumferential direction (C) and having circumferential-direction overlapping dimensions (b1, b2) with both of two shoulder blocks (14-2, 14-3) positioned on both sides in the tire-circumferential direction (C) of the one shoulder block (14-1).

3. The tire (1) according to claim 2, wherein the circumferential-direction overlapping dimensions (b1, b2) of the side block (24) are in a range of at least 5% and no more than 20% relative to a circumferential-direction dimension (Lb) of each of the shoulder blocks (14-2, 14-3).

4. The tire (1) according to any one of claims 1 to 3, wherein the side block (24) has a maximum height dimension from a surface of the sidewall (3) in a range of at least 4 mm and no more than 15 mm.

5. The tire (1) according to any one of claims 1 to 4, wherein the first shoulder block (14B1) configures the two shoulder blocks (14-2, 14-3) positioned on both sides in a tire-circumferential direction (C) of the one shoulder block (14-1).

6. The tire (1) according to any one of claims 1 to 5, wherein the second shoulder block (14B2) configures the one shoulder block (14-1).

7. The tire (1) according to any one of claims 1 to 6, wherein the tread (4) includes a center region (16) demarcated and formed by the pair of shoulder main grooves (11), wherein a center main groove (17) extending along the tire-circumferential direction (C) is fixedly set in the center region (16); and two center block rows (19a, 19b) configured by arranging side-by-side in the tire-circumferential direction (C) a plurality of center blocks (18a, 18b) divided by configuring the center main groove (17) and the pair of shoulder main grooves (11) in an extended form of substantially zigzag shape connecting to each other.

## Patentansprüche

1. Ein Reifen (1), der Folgendes umfasst: eine Lauffläche (4); ein Paar von Seitenwänden (3), die sich von beiden Enden in einer Reifen-Breitenrichtung (W) der Lauffläche (4) zu einer Innenseite in einer Reifen-Radialrichtung erstrecken; einen Schulterbereich (12), der durch ein Laufflächenende (Te) und eine Schulter-Hauptrille (11), die sich in einer Laufflächen-Oberfläche entlang einer Reifen-Umfangsrichtung (C) erstreckt, abgegrenzt und gebildet ist, wobei der Schulterbereich (12) eine Vielzahl von Schulter-Querrillen (13) beinhaltet, die sich von der Schulter-Hauptrille (11) zu einer Außenseite in Reifen-Breitenrichtung erstrecken, fest eingestellt ist; und eine Schulterblockreihe, die durch Ausrichten einer Vielzahl von Schulterblöcken (14), die durch das Laufflächenende (Te), die Schulter-Hauptrille (11) und die Vielzahl von Schulter-Querrillen (13) abgegrenzt sind, in der Reifen-Umfangsrichtung (C) konfiguriert ist,
wobei die Seitenwand (3) eine Seitenblockreihe (25) beinhaltet, die durch eine Vielzahl von Seitenblöcken (24) konfiguriert ist, die fest in der Reifen-Umfangsrichtung (C) Seite an Seite gesetzt sind, und die von einer Oberfläche der Seitenwand (3) vorstehen,
wobei eine Umfangsrichtungs-Abmessung (Lb) eines Seitenblocks (24) größer ist als eine Umfangsrichtungs-Abmessung (23) eines Bereichs, in dem ein Schulterblock (14-1) und zwei Schulter-Querrillen (13), die den einen Schulterblock (14-1) begrenzen, vorhanden sind, und
wobei die Schulterblockreihe (15) konfiguriert ist durch zwei Arten von Schulterblöcken (14B1, 14B2) mit unterschiedlichen Größen der Blocklauffläche, die abwechselnd in einer Reifen-Umfangsrichtung (C) angeordnet sind,
**dadurch gekennzeichnet, dass**
die zwei Arten von Schulterblöcken (14B1, 14B2) einen ersten Schulterblock (14B1) und einen zweiten Schulterblock (14B2) beinhalten, bei dem eine äußere Endposition (28B2) in Reifen-Breitenrichtung weiter innen in einer Reifen-Breitenrichtung positioniert ist als eine äußere Endposition (28B1) in Reifen-Breitenrichtung des ersten Schulterblocks (14B1).

2. Der Reifen (1) nach Anspruch 1, wobei die Umfangsrichtungs-Abmessung (Lb) des einen Seitenblocks (24) größer ist als die Umfangsrichtungs-Abmessung (23) eines Bereichs, in dem die beiden Schulter-Querrillen (13) vorhanden sind, und
wobei die Seitenblöcke (24) fest in eine Positionsbeziehung gesetzt sind, die sich in einer Reifen-Umfangsrichtung (C) überlappt und Umfangsrichtungs-Überlappungsabmessungen (b1, b2) mit beiden von zwei Schulterblöcken (14-2, 14-3) aufweist, die in Reifen-Umfangsrichtung (C) auf beiden Seiten des einen Schulterblocks (14-1) positioniert sind.

3. Der Reifen (1) nach Anspruch 2, wobei sich die Umfangsrichtungs-Überlappungsabmessungen (b1, b2) des Seitenblocks (24) in einem Bereich von mindestens 5 % und nicht mehr als 20 % relativ zu einer Umfangsrichtungs-Abmessung (Lb) jedes der Schulterblöcke (14-2, 14-3) liegen.

4. Der Reifen (1) nach irgendeinem der Ansprüche von 1 bis 3, wobei der Seitenblock (24) eine maximale Höhenabmessung von einer Oberfläche der Seitenwand (3) aufweist, die in einem Bereich von mindestens 4 mm und nicht mehr als 15 mm liegt.

5. Der Reifen (1) nach irgendeinem der Ansprüche von 1 bis 4, wobei der erste Schulterblock (14B1) die beiden Schulterblöcke (14-2, 14-3) konfiguriert, die in einer Reifen-Umfangsrichtung (C) des einen Schulterblocks (14-1) auf beiden Seiten positioniert sind.

6. Der Reifen (1) nach irgendeinem der Ansprüche von 1 bis 5, wobei der zweite Schulterblock (14B2) den einen Schulterblock (14-1) konfiguriert.

7. Der Reifen (1) nach irgendeinem der Ansprüche von 1 bis 6, wobei die Lauffläche (4) Folgendes beinhaltet: einen Mittelbereich (16), der durch das Paar von Schulter-Hauptrillen (11) abgegrenzt und gebildet wird, wobei eine Mittel-Hauptrille (17), die sich entlang der Reifen-Umfangsrichtung (C) erstreckt, fest in den Mittelbereich (16) gesetzt ist; und zwei Mittelblockreihen (19a, 19b), die konfiguriert werden durch das in Reifen-Umfangsrichtung (C) nebeneinanderliegende Anordnen einer Vielzahl von Mittelblöcken (18a, 18b), die getrennt sind durch das Konfigurieren der Mittel-Hauptrille (17) und des Paares von Schulter-Hauptrillen (11) in einer langgestreckten, im Wesentlichen zickzackartigen Form, die miteinander verbunden sind.

## Revendications

1. Un pneumatique (1) comprenant : une bande de roulement (4) ; une paire de parois latérales (3) s'étendant depuis les deux extrémités dans la direction de largeur de pneu (W) de la bande de roulement (4) vers un côté intérieur dans la direction radiale de pneu ; une région d'épaulement (12) délimitée et formée par une extrémité de bande de roulement (Te) et une rainure principale d'épaulement (11) s'étendant le long d'une direction circonférentielle de pneu (C), dans une surface de bande de roulement, la région d'épaulement (12), incluant une pluralité de rainures transversales d'épaulement (13) s'étendant à partir de la rainure principale d'épaulement (11) vers un côté extérieur dans la direction de largeur de pneu, est agencée de manière fixe ; et une rangée de blocs d'épaulement configurée par l'alignement dans la direction circonférentielle de pneu (C) d'une pluralité de blocs d'épaulement (14) délimités par l'extrémité de bande de roulement (Te), la rainure principale d'épaulement (11) et la pluralité de rainures transversales d'épaulement (13),
sachant que la paroi latérale (3) inclut une rangée de blocs latéraux (25) configurée par une pluralité de blocs latéraux (24) agencés de manière fixe côte à côte dans la direction circonférentielle de pneu (C), et faisant saillie à partir d'une surface de la paroi latérale (3),
sachant qu'une dimension de direction circonférentielle (Lb) d'un bloc latéral (24) est supérieure à une dimension de direction circonférentielle (23) d'une région dans laquelle se trouvent un bloc d'épaulement (14-1) et deux rainures transversales d'épaulement (13) délimitant le bloc d'épaulement (14-1), et
sachant que la rangée de blocs d'épaulement (15) est configurée par deux types de blocs d'épaulement (14B1, 14B2) présentant des tailles différentes de surface de bande de roulement de bloc alternativement disposées dans une direction circonférentielle de pneu (C),
**caractérisé en ce que**
les deux types de blocs d'épaulement (14B1, 14B2) incluent un premier bloc d'épaulement (14B1), et un deuxième bloc d'épaulement (14B2) dans lequel une position d'extrémité extérieure en direction de largeur de pneu (28B2) est positionnée plus vers un côté intérieur en direction de largeur de pneu qu'une position d'extrémité extérieure en direction de largeur de pneu (28B1) du premier bloc d'épaulement (14B1).

2. Le pneumatique (1) d'après la revendication 1, sachant que la dimension de direction circonférentielle (Lb) dudit bloc latéral (24) est plus grande que la dimension de direction circonférentielle (23) d'une région dans laquelle les deux rainures transversales d'épaulement (13) existent, et
sachant que les blocs latéraux (24) sont agencés de manière fixe dans une relation de position de chevauchement dans une direction circonférentielle de pneu (C) et présentant des dimensions de chevauchement dans la direction circonférentielle (b1, b2) avec les deux blocs d'épaulement (14-2, 14-3) positionnés des deux côtés dans la direction circonférentielle de pneu (C) dudit bloc d'épaulement (14-1).

3. Le pneumatique (1) d'après la revendication 2, sachant que les dimensions de chevauchement dans la direction circonférentielle (b1, b2) du bloc latéral (24) sont comprises dans une plage d'au moins 5 % et ne dépassant pas 20 % par rapport à une dimension dans la direction circonférentielle (Lb) de chacun des blocs d'épaulement (14-2, 14-3).

4. Le pneumatique (1) d'après l'une quelconque des revendications de 1 à 3, sachant que le bloc latéral (24) présente une dimension de hauteur maximale par rapport à une surface de la paroi latérale (3) comprise entre au moins 4 mm et ne dépassant pas 15 mm.

5. Le pneumatique (1) d'après l'une quelconque des revendications de 1 à 4, sachant que le premier bloc d'épaulement (14B1) configure les deux blocs d'épaulement (14-2, 14-3) positionnés de part et d'autre dans une direction circonférentielle de pneu (C) dudit bloc d'épaulement (14-1).

6. Le pneumatique (1) d'après l'une quelconque des revendications de 1 à 5, sachant que le deuxième bloc d'épaulement (14B2) configure ledit bloc d'épaulement (14-1).

7. Le pneumatique (1) d'après l'une quelconque des revendications de 1 à 6, sachant que la bande de roulement (4) inclut : une région centrale (16) délimitée et formée par la paire de rainures principales d'épaulement (11), sachant qu'une rainure principale centrale (17) s'étendant le long de la direction circonférentielle de pneu (C) est agencée de manière fixe dans la région centrale (16) ; et deux rangées de blocs centraux (19a, 19b) configurées par l'agencement côte à côte dans la direction circonférentielle de pneu (C) d'une pluralité de blocs centraux (18a, 18b) divisés en configurant la rainure principale centrale (17) et la paire de rainures principales d'épaulement (11) sous une forme allongée essentiellement en zigzag se connectant l'une à l'autre.
